# EUROPEAN PATENT APPLICATION

(11) **EP 4 415 445 A1**
(43) Date of publication of application: **14.08.2024**
(21) Application number: 22878912.9
(22) Date of filing: 06.10.2022
(51) Int. Cl.: H04W 72/02, H04W 72/04, H04W 72/56, H04W 76/28, H04L 1/18, H04W 4/40, H04W 72/12

(54) **METHOD AND DEVICE FOR SELECTING RESOURCE IN NR V2X IN CONSIDERATION OF SL DRX ACTIVE TIME**

(30) Priority: 06.10.2021 KR 20210132327; 21.10.2021 KR 20210141282
(71) Applicant: LG Electronics Inc., Yeongdeungpo-gu Seoul 07336 (KR)
(72) Inventor: PARK, Giwon, Seoul 06772 (KR); SEO, Hanbyul, Seoul 06772 (KR); BACK, Seoyoung, Seoul 06772 (KR); LEE, Seungmin, Seoul 06772 (KR)
(74) Representative: Plasseraud IP
(86) International application number: PCT/KR2022/015037
(87) International publication number: WO 2023/059091

(57) **Abstract**

Proposed is a method for operating a first device (100) in a wireless communication system. The method may comprise the steps of: acquiring an SL DRX configuration related to a second device (200); acquiring a first minimum number of slots to be included in an active time of the SL DRX configuration; determining at least one candidate resource on the basis of the first minimum number; and selecting, on the basis of the at least one candidate resource, at least one resource for transmitting an MAC PDU to the second device (200).

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

According to an embodiment of the present disclosure, a method for performing, by a first device, wireless communication may be proposed. For example, the method may comprise: obtaining a sidelink, SL, discontinuous reception, DRX, configuration related to a second device; obtaining a first minimum number of slots to be included within an active time of the SL DRX configuration; determining at least one candidate resource based on the first minimum number; selecting at least one resource for transmitting a medium access control, MAC, protocol data unit, PDU, to the second device, based on the at least one candidate resource; transmitting, to the second device, sidelink control information, SCI, for scheduling of a physical sidelink shared channel, PSSCH, through a physical sidelink control channel, PSCCH, based on the at least one resource; and transmitting, to the second device, the MAC PDU through the PSSCH, based on the at least one resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration related to a second device; obtain a first minimum number of slots to be included within an active time of the SL DRX configuration; determine at least one candidate resource based on the first minimum number; select at least one resource for transmitting a medium access control, MAC, protocol data unit, PDU, to the second device, based on the at least one candidate resource; transmit, to the second device, sidelink control information, SCI, for scheduling of a physical sidelink shared channel, PSSCH, through a physical sidelink control channel, PSCCH, based on the at least one resource; and transmit, to the second device, the MAC PDU through the PSSCH, based on the at least one resource.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain a sidelink, SL, discontinuous reception, DRX, configuration related to a second UE; obtain a first minimum number of slots to be included within an active time of the SL DRX configuration; determine at least one candidate resource based on the first minimum number; select at least one resource for transmitting a medium access control, MAC, protocol data unit, PDU, to the second UE, based on the at least one candidate resource; transmit, to the second UE, sidelink control information, SCI, for scheduling of a physical sidelink shared channel, PSSCH, through a physical sidelink control channel, PSCCH, based on the at least one resource; and transmit, to the second UE, the MAC PDU through the PSSCH, based on the at least one resource.

According to an embodiment of the present disclosure, a non-transitory computer-readable storage medium storing instructions may be proposed. For example, when executed, the instructions may cause a first device to: obtain a sidelink, SL, discontinuous reception, DRX, configuration related to a second device; obtain a first minimum number of slots to be included within an active time of the SL DRX configuration; determine at least one candidate resource based on the first minimum number; select at least one resource for transmitting a medium access control, MAC, protocol data unit, PDU, to the second device, based on the at least one candidate resource; transmit, to the second device, sidelink control information, SCI, for scheduling of a physical sidelink shared channel, PSSCH, through a physical sidelink control channel, PSCCH, based on the at least one resource; and transmit, to the second device, the MAC PDU through the PSSCH, based on the at least one resource.

According to an embodiment of the present disclosure, a method for performing, by a second device, wireless communication may be proposed. For example, the method may comprise: obtaining a sidelink, SL, discontinuous reception, DRX, configuration; receiving, from a first device, sidelink control information, SCI, for scheduling of a physical sidelink shared channel, PSSCH, through a physical sidelink control channel, PSCCH, based on at least one resource; and receiving, from the first device, the MAC PDU through the PSSCH, based on the at least one resource, wherein the at least one resource is selected based on at least one candidate resource determined based on a first minimum number, wherein the first minimum number is a minimum number of slots to be included within an active time of the SL DRX configuration, and wherein information for the first minimum number is delivered to a physical, PHY, layer of the first device from a MAC layer of the first device.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration; receive, from a first device, sidelink control information, SCI, for scheduling of a physical sidelink shared channel, PSSCH, through a physical sidelink control channel, PSCCH, based on at least one resource; and receive, from the first device, the MAC PDU through the PSSCH, based on the at least one resource, wherein the at least one resource may be selected based on at least one candidate resource determined based on a first minimum number, wherein the first minimum number may be a minimum number of slots to be included within an active time of the SL DRX configuration, and wherein information for the first minimum number may be delivered to a physical, PHY, layer of the first device from a MAC layer of the first device.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a procedure for selecting at least one candidate resource based on the minimum number, according to one embodiment of the present disclosure.
FIG. 9 shows a current active time and a future active time, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, `when, if, or in case of' may be replaced with `based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

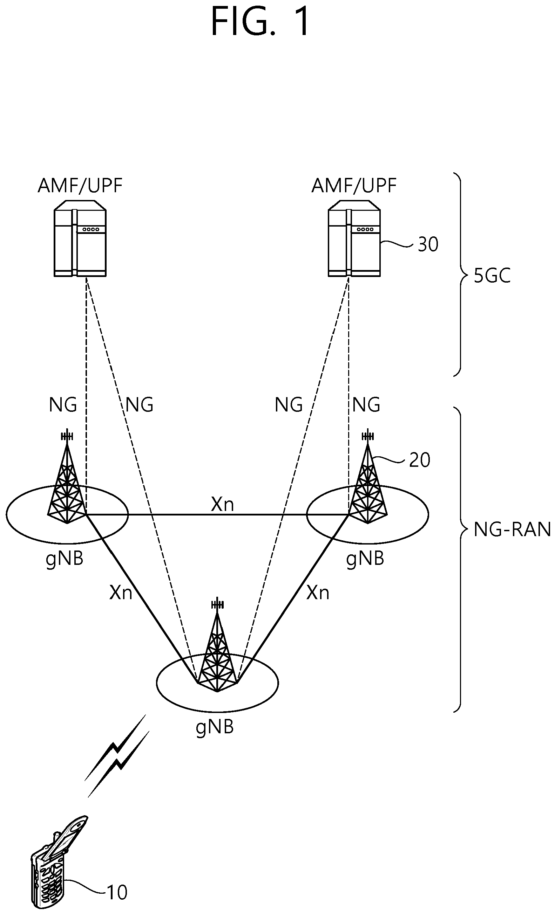

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

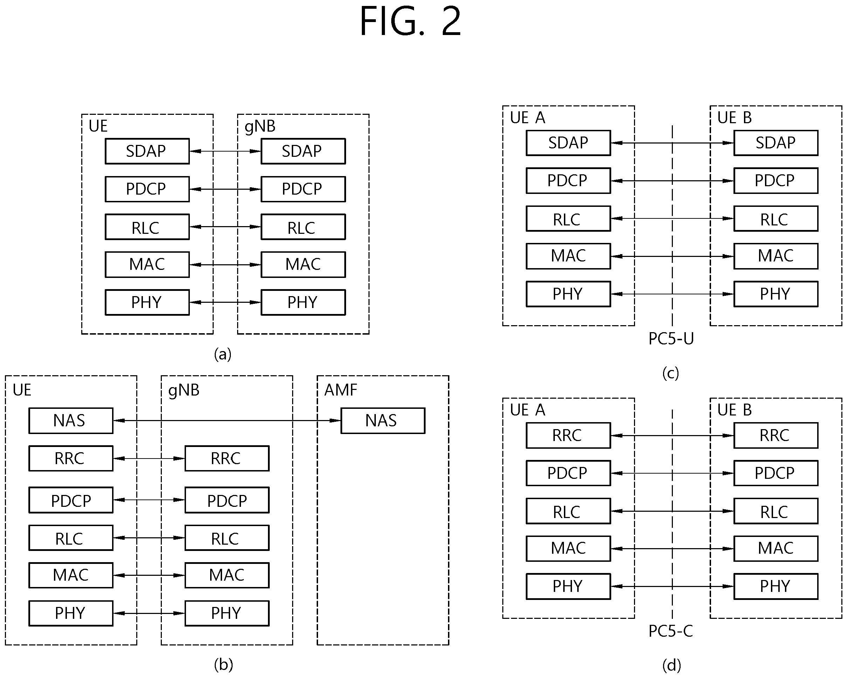

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an higher layer with an information transfer service through a physical channel. The physical layer is connected to a medium access control (MAC) layer which is an higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

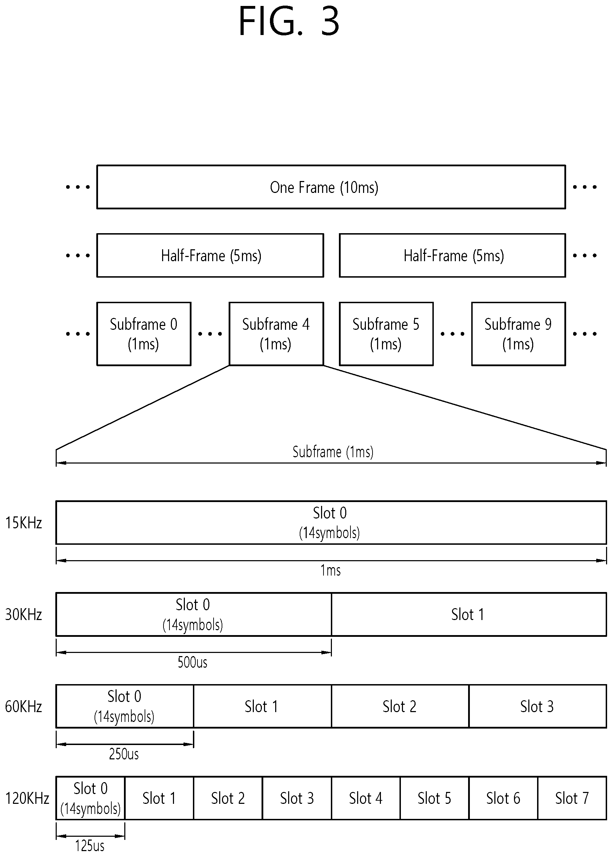

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

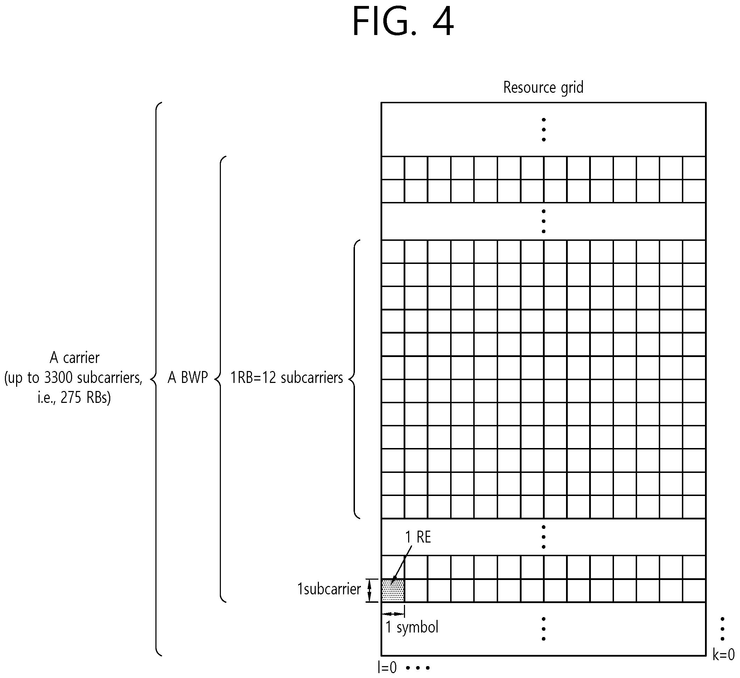

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

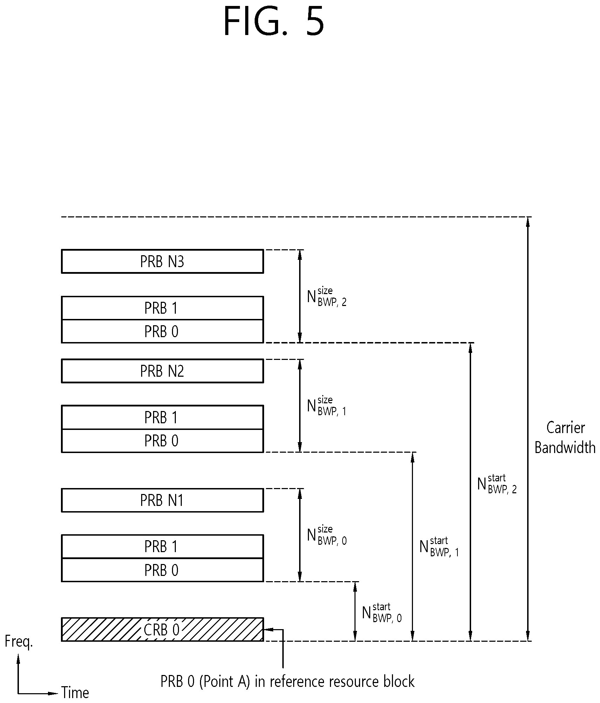

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

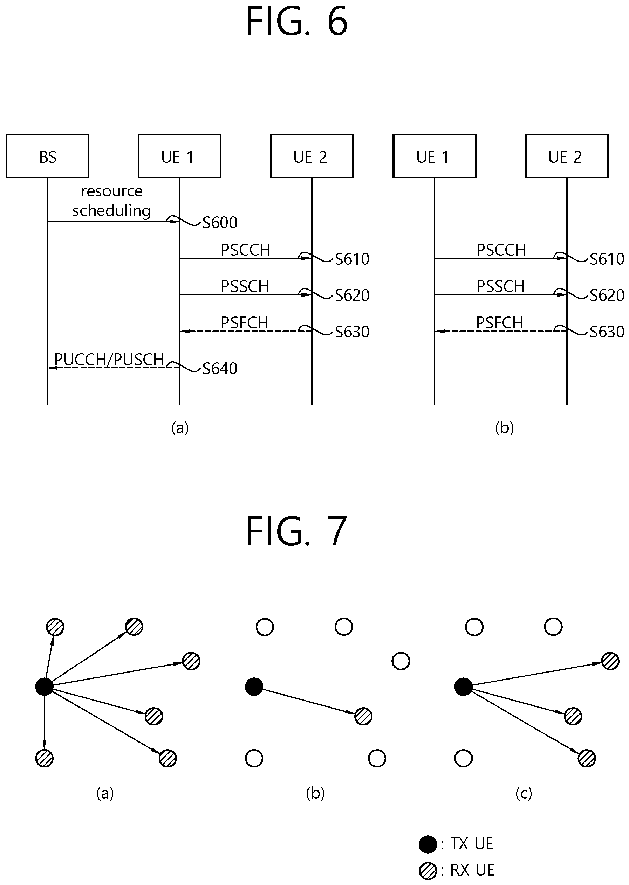

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

In the following, the remaining issues with sidelink (SL) discontinuous reception (DRX) are discussed.
- resource selection considering an SL DRX active time

Table 8 below shows the feature for the resource selection procedure.

**[Table 8]**

| | |
|---|---|
| **Proposed working assumption (v02):** | |
| When PHY layer is indicated with an active time of RX UE from MAC layer for candidate resource selection, a restriction is applied in PHY layer so that at least a subset of candidate resources reported to MAC layer is located within the indicated active time of the RX UE. The following options will be further discussed in RAN1 to restrict resources for candidate resource selection taking into account the indicated active time from MAC layer: | |
| | • Option 1: PHY layer selects and reports candidate resources only within the indicated active time of the RX UE |
| | • Option 2: PHY layer selects and reports candidate resources in which at least a subset of the candidate resources is within the indicated active time of the RX UE |
| | • Option 3: PHY layer selects and reports an additional candidate resource set of candidate resources within the indicated active time of the RX UE |

For example, if the physical (PHY) layer is indicated an active time of a receiving UE from a medium access control (MAC) layer for candidate resource selection, a limitation may be applied to the PHY layer such that at least one subset of candidate resources reported to the MAC layer is located within the indicated active time of the receiving UE. The following options shows a feature related to the form in which the selected candidate resources are to be included within the active time indicated by the MAC layer.

Option 1: The PHY layer selects and reports only candidate resources that exist within the active time of the receiving UE indicated above.

Option 2: The PHY layer selects and reports the candidate resources, such that at least one subset of the candidate resources is included within the active time of the receiving UE as indicated above.

Option 3: The PHY layer selects and reports an additional set of candidate resources, within the active time of the receiving UE as indicated above.

For example, since a retransmission resource is a resource that may be used in the future, it may be desirable to select the retransmission resource considering the inactive time. For example, the inactive time may be a time when a transmitting UE will be in an active time period in the future by the selected resource. Thus, option 1 may not be an ideal option in that it excludes resources with future active periods.

For example, both options 2 and 3 above consider resources in the future active time. However, considering the simplicity of the UE's selection procedure of the "subset of candidate resources", option 2 above may be a better choice.

For example, assuming that a set of candidate resources is selected by the physical layer according to option 2, a procedure may be required in which the MAC layer indicates the current active time of the receiving UE. That is, when resource selection is triggered, the MAC layer may inform the physical layer of the current active time information (e.g., a minimum number of slots related to the current active time), and the physical layer may determine a set of candidate resources based on the minimum number of slots related to the current active time informed by the MAC. Finally, the MAC layer may perform the same resource selection procedure as in prior art based on the set of candidate resources indicated by the physical layer.

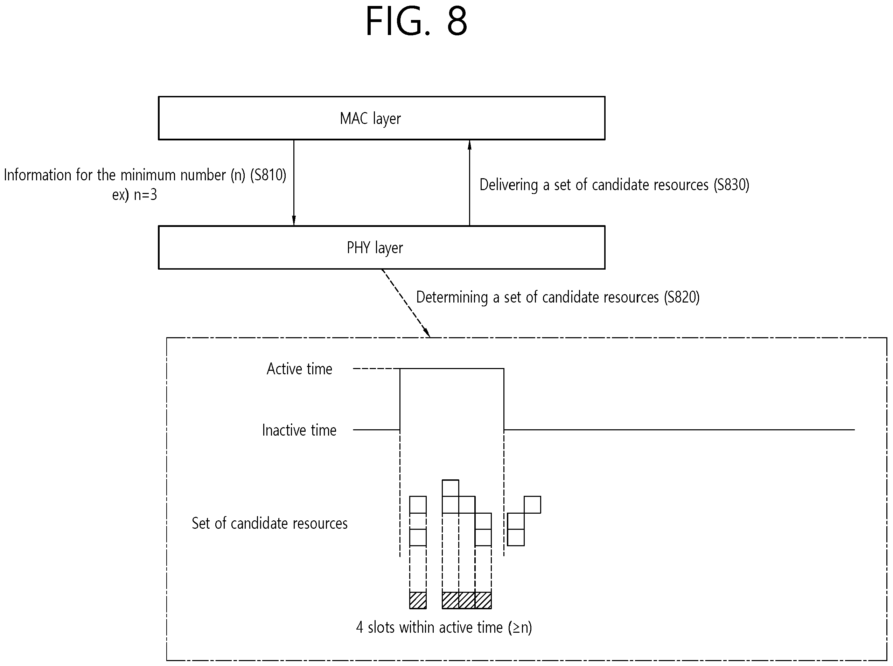

FIG. 8 shows a procedure for selecting at least one candidate resource based on the minimum number, according to one embodiment of the present disclosure. The embodiment of FIG. 8 may be combined with various embodiments of the present disclosure.

Referring to FIG. 8, a MAC layer and a PHY layer of a transmitting UE are shown. In step S810, the MAC layer of the transmitting UE may deliver information for the minimum number of candidate resources that should be included within the active time of the receiving UE (e.g., the current active time) to the PHY layer of the transmitting UE. For example, the minimum number may be a minimum number of slots. For example, in the present embodiment, the minimum number (n) is assumed to be 3.

At step S820, the PHY layer may determine a set of candidate resources based on the minimum number. Here, the PHY layer may determine the set of candidate resources such that the number of slots in the set of candidate resources is greater than or equal to the minimum number. For example, in this embodiment, the minimum number is 3, so assume that the PHY layer determines the candidate resource set to include 4 slots that are greater than or equal to 3.

At step S830, the PHY layer may deliver the determined set of candidate resources to the MAC layer. For example, the PHY layer may select a final transmission resource based on the delivered set of candidate resources. For example, the transmitting UE may perform an SL transmission based on the transmission resource.

For example, in order to determine a set of candidate resources at the physical layer, the MAC layer may need to provide the current active time of the receiving UE.

For example, the MAC layer may provide information for a limitation to the PHY layer when resource (re)selection is triggered, and may perform resource (re)selection based on a set of candidate resource(s) reported by the PHY layer.

For example, the information provided to the PHY layer for the limitation may include the current active time of the receiving UE and the minimum number of slots within the current active time among the reported set of candidate resources.

For example, the MAC layer may select resources by considering current and future active times. If the MAC layer selects N resources for the transmission of MAC PDUs, at least X resources must be selected within the current active time, and the remaining N-X resources may be selected within the current and future active times.

For example, the future active time may be updated at selection of each resource. For example, if a resource in slot n is within the current or future active time and is selected by the MAC layer, if it is not included within the current active time, each of the slots n+1, n+2, ..., n+k may be considered to be included within the future active time. Here, k may mean a timer to be operated when the receiving UE receives the SCI in slot n.

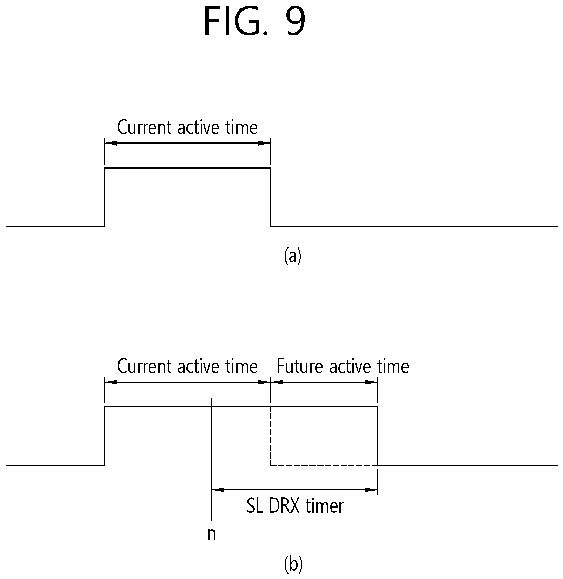

FIG. 9 shows a current active time and a future active time, according to one embodiment of the present disclosure. The embodiment of FIG. 9 may be combined with various embodiments of the present disclosure.

Referring to (a) of FIG. 9, a current active time is shown, where the upper portion of the graph represents the active time and the lower portion represents the inactive time. For example, the current active time may refer to the active time of the receiving UE at the time of resource selection.

Referring to (b) of FIG. 9, the current active time and the future active time are shown. For example, n may refer to a time at which the SCI is received by the receiving UE. For example, at time n, the receiving UE may start a timer related to the SL DRX active time. For example, the active time may extend to the interval during which the timer related to the SL DRX active time is running. That is, the interval extended by the timer related to the SL DRX active time may be the future active time. That is, the interval that is inactive time at the time of resource selection and becomes active time by the timer related to the SL DRX active time may be the future active time.
- mode 2 resource allocation and SL DRX

For example, in Release 16 NR resource allocation mode 2 operation, if there are multiple MAC PDUs to be transmitted, a UE may perform resource reservation in a plurality of periods. Further, for each MAC PDU transmission, the MAC PDU may be transmitted using one of the resources reserved for the plurality of periods. The resource reselection procedure may be triggered based on preemption, UL/SL (or, NR SL/LTE SL) prioritization, a resource that has been indicated in the SCI and canceled, and for which the resource reselection procedure was triggered. The reselected resource may then be re-indicated via SCI again and transmitted to the receiving UE. That is, if the transmitting UE transmits SCI using a resource other than the resource indicated in the previous SCI, the receiving UE performing SL DRX may not be able to receive the PSCCH/PSSCH transmitted by the transmitting UE. Therefore, a mechanism needs to be provided to ensure that the receiving UE performing SL DRX receives the PSCCH/PSSCH, considering the possibility that resource reselection may occur due to preemption or the like.

For example, if the SCI is transmitted from a resource other than the resource indicated in the previous SCI from the transmitting UE due to preemption, the receiving UE performing SL DRX may not be able to receive the PSCCH/PSSCH transmitted from the transmitting UE.

For example, considering the possibility that resource reselection may occur due to preemption, a mechanism needs to be provided to ensure that the receiving UE can successfully receive the PSCCH/PSSCH transmitted by the transmitting UE.
- Issues related to Uu DRX timers

For example, whether to support a HARQ RTT timer when PUCCH is not configured is being discussed. A deeper optimization of the above topic may be possible by starting the HARQ RTT timer to increase the power saving effect of the UE when PUCCH is not configured in the resource pool but PSFCH is configured. For example, the UE may not monitor the mode 1 DCI by starting a HARQ RTT timer for the time interval from the last PSSCH to the PSFCH resource + min time gap (e.g., the minimum processing time to be guaranteed between the PFSCH reception and the retransmission resource), or the UE may not monitor the mode 1 DCI by starting a HARQ RTT timer for the time interval from the PFSCH reception by the min time gap (e.g., the minimum processing time to be guaranteed between the PFSCH reception and the retransmission resource).

For example, if PUCCH is not configured in the resource pool and PSFCH is configured, power saving gains may be achieved by starting the HARQ RTT timer.

For example, if PUCCH is not configured for a resource pool and PSFCH is configured, the SL DRX HARQ RTT timer needs to be provided.

For example, if sl-PUCCH-Config is configured but PUCCH is not transmitted due to UL/SL prioritization, a transmitting UE should start the SL-specific drx-HARQ-RTT-Timer of Uu for the corresponding SL HARQ process in the first slot after the end of the corresponding PUCCH resource.

For the operation, for example, it may be discussed whether to start a retransmission timer or not, based on whether the dropped PUCCH is a SL feedback "ACK" or "NACK". For example, if the dropped PUCCH is an SL NACK, then the Uu DRX retransmission timer SL may be started, or if the dropped PUCCH is an SL ACK, then the Uu DRX retransmission timer SL is not started.

For example, for the Uu DRX timer operation in the PUCCH drop case, it needs to be discussed whether to start the retransmission timer or not, based on whether the dropped PUCCH is an SL feedback "ACK" or "NACK".

For example, if the dropped PUCCH is SL NACK, the Uu DRX retransmission timer SL may be started, and if the dropped PUCCH is ACK, the Uu DRX retransmission timer SL is not started.
- an SL DRX HARQ RTT timer and a HARQ feedback disabled MAC PDU

For example, in the case of HARQ feedback disabled, the starting of the sl-drx-HARQ-RTT-Timer by a receiving UE needs to be discussed. For example, if a transmitting UE has scheduled one or more SL resources via SCI, it may be reasonable to assume that a blind retransmission will not be scheduled before the transmitting UE has completed all transmission opportunities scheduled via the SCI.

For example, the sl-drx-HARQ-RTT-Timer may be started in the first slot after the end of the last PSSCH resource scheduled via SCI.
- UL/SL prioritization and SL DRX

For example, if a transmitting UE drops an SL transmission due to UL/SL prioritization just before the expiration of the active time (e.g., on-duration timer), a receiving UE may enter sleep mode after the expiration of the active time and therefore the receiving UE may not be able to monitor the SL transmission until the next active time. In this case, the PDB of SL data may expire, which may lead to failure of SL data transmission/reception. Furthermore, if the SL transmission is not dropped, an SL reception may be continued by extending the active time of the receiving UE, i.e., the UL/SL prioritization in prior art may prevent the UE from completing the SL transmission/reception during SL DRX, or may cause a loss of active time for the receiving UE. Therefore, there is a need to discuss the enhancement of UL/SL prioritization for UEs performing SL DRX.

For example, UL/SL prioritization comparison in prior art may prevent a UE from completing SL transmission/reception during SL DRX, or may cause loss of active time for the receiving UE.

For example, the enhancement of UL/SL prioritization for UEs performing SL DRX needs to be discussed.
- SL DRX considering a plurality of MAC PDU transmissions

For example, according to the R16 LCP operation, a transmitting UE may select a destination related to the highest priority logical channel. If the transmitting UE performs periodic resource reservation for multiple MAC PDU transmissions, and a receiving UE performs SL DRX operation, a case may occur where the receiving UE wakes up and wastes power to perform unnecessary PSCCH/PSSCH decoding.

If, for example, a transmission occurs in the SL DRX on-duration of a receiving UE #A, and the next transmission is scheduled within the expected SL DRX extended active interval of the receiving UE #A, the receiving UE #A may wake up at the scheduled resource time and attempt to decode for PSCCH/PSSCH. However, it may not be guaranteed that the scheduled resource within the extended active interval will be used for the transmission to the receiving UE #A. If, at the time of the reserved resource, another MAC PDU for the receiving UE #B has a higher priority than the one for the receiving UE #A, the MAC PDU of the receiving UE #B may be selected and transmitted according to its higher priority. In this case, the receiving UE's power may be wasted for unnecessary wake-up and decoding of scheduled resource time.

For example, to avoid the above case and to save power of a receiving UE, a transmitting UE may prioritize the MAC PDU of the receiving UE #A for the reserved resource in the above case. For example, if the time is also the SL DRX active time related to the MAC PDU of UE #B, the MAC PDU of UE #B may be transmitted. However, if, at the reserved resource time, the MAC PDU of the receiving UE #A is unavailable and the MAC PDU of the receiving UE #B is available, the MAC PDU of the receiving UE #B may be transmitted using the reserved resource.

For example, when a receiving UE performs SL DRX operation and a transmitting UE transmits a packet for a destination within the SL DRX on-duration of the receiving UE, the transmitting UE may prioritize the transmission of a packet for the same destination, using resources reserved for transmitting multiple MAC PDUs, within the expected extended SL DRX active interval of the receiving UE.
- HARQ combining and SL DRX

For example, if a receiving UE performs HARQ combining under SL DRX operation, a case may occur where the receiving UE performs combining for different packets, which may result in degraded decoding performance. For example, in groupcast option 2 (NACK-only HARQ feedback mode), if a receiving UE fails to decode packet #A received within its SL DRX on-duration, and the transmitting UE retransmits the packet #A in the extended SL DRX active interval of the receiving UE based on the receipt of the HARQ NACK, if the receiving UE fails to decode the PSCCH/PSSCH of the the retransmission (DTX case), the transmitting UE may determine that the the retransmission is successful due to the absence of a HARQ ACK response. At this point, a transmitting UE may attempt to transmit the next packet #B in the expected extended active interval of the receiving UE based on the previous successful transmission. However, since the receiving UE did not successfully receive the retransmitted packet and thus did not extend the SL DRX active interval, it may not receive the packet #B as well, and thus the transmitting UE may mistake this for a successful transmission (since there is no NACK transmission). For example, within the SL DRX on-duration of the receiving UE in the next SL DRX period, the transmitting UE may transmit a new packet #C using the same HARQ process number and NDI as the packet #A transmission. In this case, the receiving UE may attempt HARQ combining for packet #A and packet #C, which may completely destroy the decoding.

For example, as one solution to the above situation, there may be a method of using a PDB known from the QoS profile of the related previous transmission. For example, after failing to decode the received packet, if the receiving UE does not receive a retransmission packet in the PDB, the receiving UE may flush the buffer for HARQ combining for the packet and wait for a new packet transmission. For example, another solution may be to use a specific timer related to the destination ID of the transmission. For example, regardless of the success or failure of decoding, when a new packet is received by a receiving UE, the receiving UE may start the timer, and if no retransmission packet is received by the expiration of the timer, the receiving UE may flush the buffer for HARQ combining for the packet and wait for a new packet transmission.

For example, in SL DRX operation, especially in Groupcast Option 2 (NACK-only HARQ feedback mode), the DTX case can cause HARQ combining errors.

For example, a solution to avoid the above HARQ combining error due to DTX case during SL DRX operation needs to be discussed.

Referring to standard documents, some procedures and technical specifications related to this disclosure may be as follows.

**[Table 9]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | - *drx-onDurationTimer*: the duration at the beginning of a DRX cycle; |
| | - *drx-SlotOffset:* the delay before starting the *drx-onDurationTimer;* |
| | - *drx-InactivityTimer:* the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset:* the Long DRX cycle and *drx-StartOffset* which defines the subframe where the Long and Short DRX cycle starts; |
| | - *drx-ShortCycle* (optional): the Short DRX cycle; |
| | - *drx-ShortCycleTimer* (optional): the duration the UE shall follow the Short DRX cycle; |
| | - *drx-HARQ-RTT-TimerDL*(per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated *drx-onDurationTimer* in case DCP is monitored but not detected; |
| | - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| | - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |

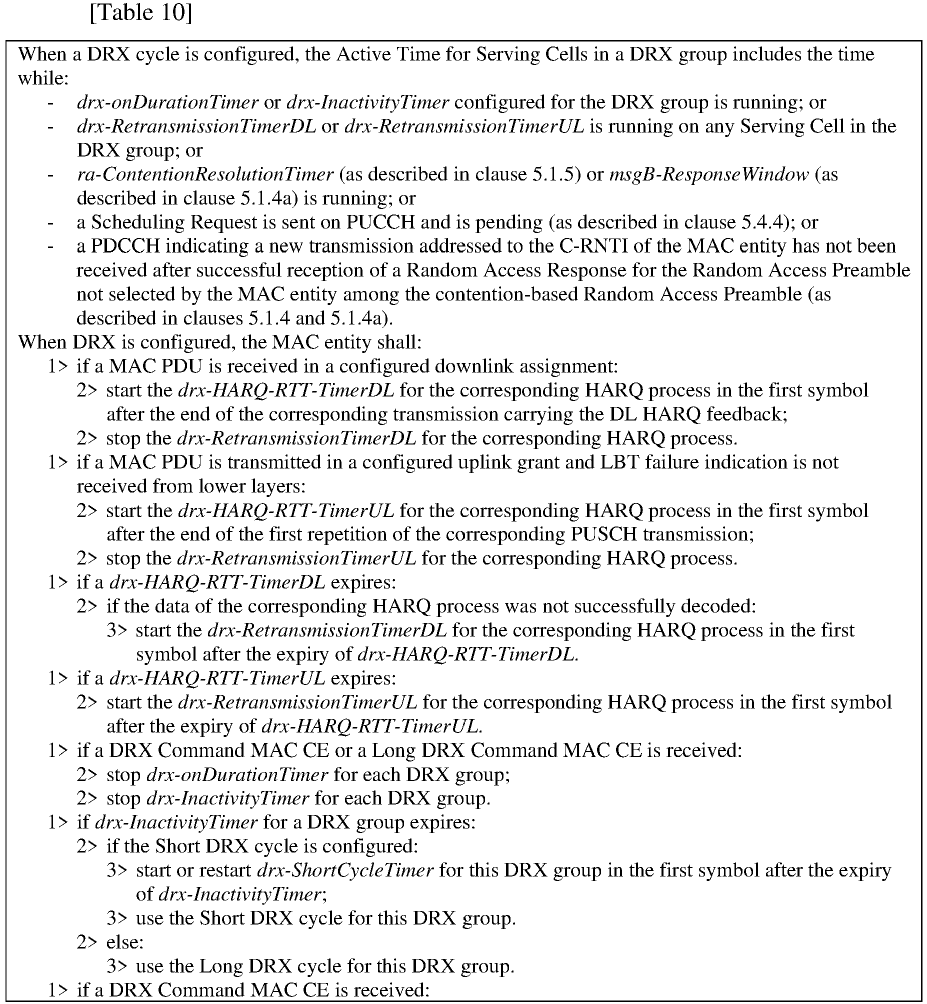

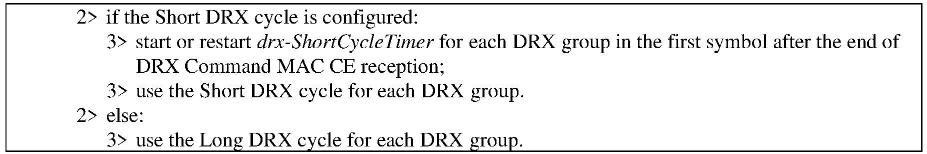

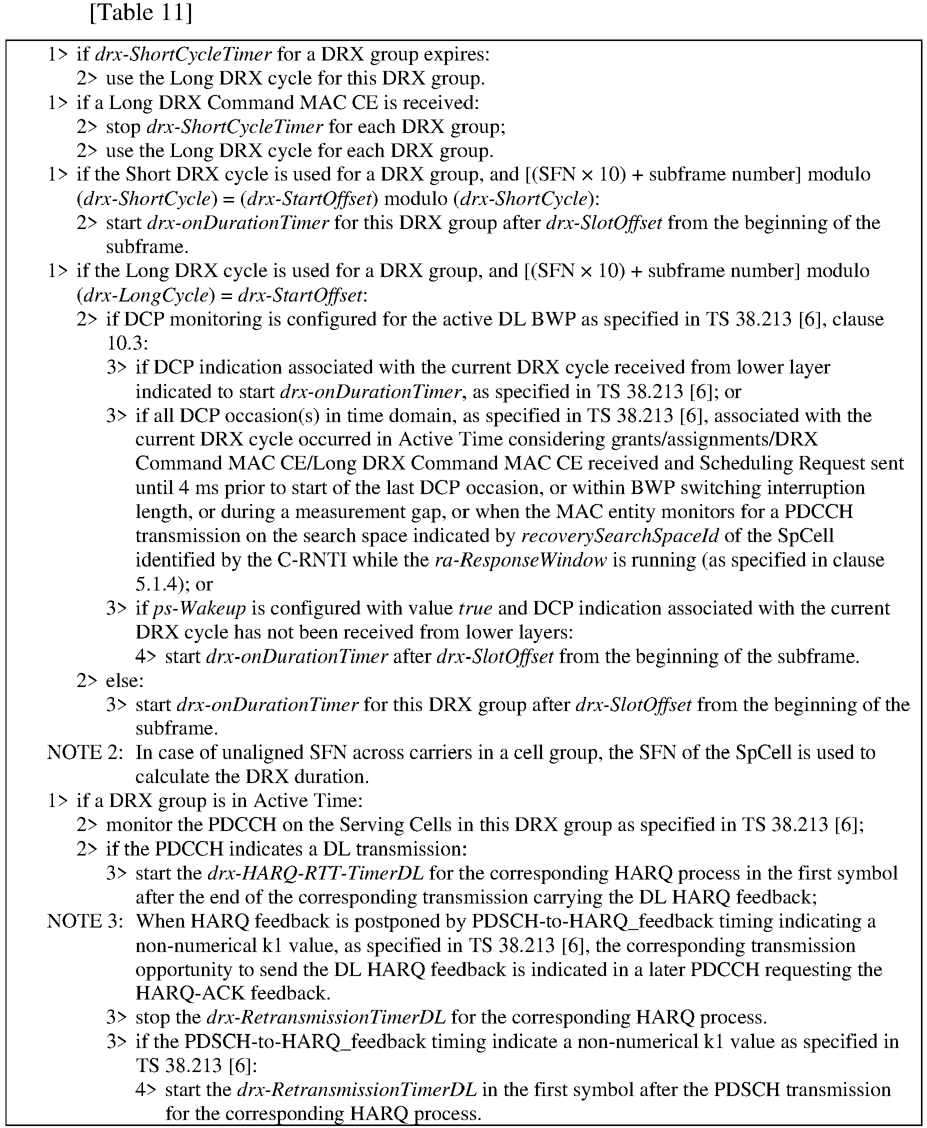

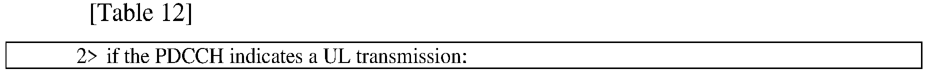

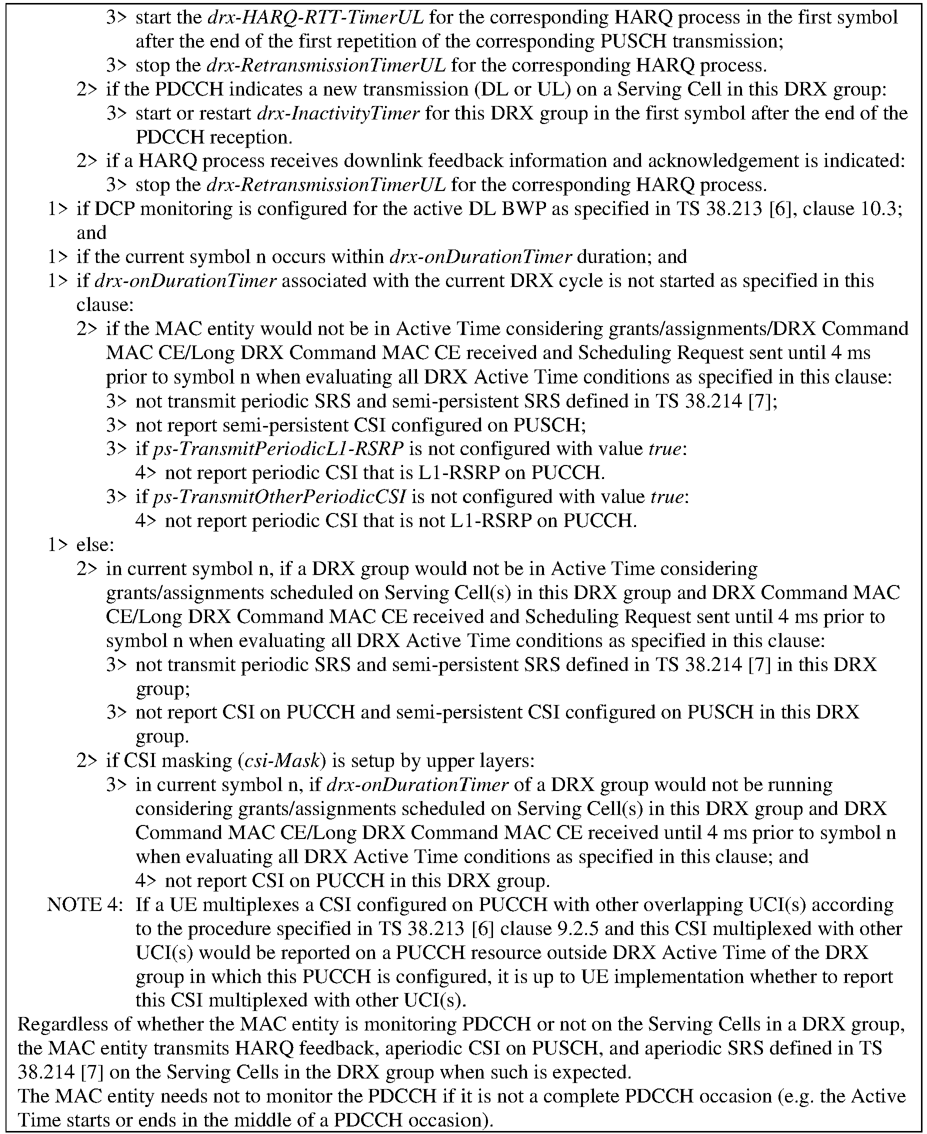

On the other hand, SL DRX operation is supported in Release 17 NR V2X. In the embodiment(s) of the present disclosure, a method for initial transmission resource selection of a transmitting UE that considers the SL DRX active time (the time the UE is operating in active mode) of a receiving UE performing sidelink operation is proposed. In the following description, "when, if, in case of" may be replaced by "based on".

According to one embodiment of the present disclosure, a UE operating SL DRX performs PSCCH/PSSCH monitoring by operating in active mode during DRX active time periods (e.g., on-duration timer, inactive timer, retransmission timer, or intervals of operating in active mode). However, during SL DRX inactive time periods, it operates in sleep mode and does not perform PSCCH/PSSCH monitoring operation to receive SL data.

According to one embodiment of the present disclosure, when a transmitting UE selects resources for the transmission of new SL data (or new SL TB), the transmitting UE may select resources including initial transmission resources as well as retransmission resources. For example, the transmitting UE may determine that five transmissions are required to transmit the new SL data (or new SL TB) and may select five resources.

For example, the transmitting UE may include three resource information in the SCI related to the transmission data during the initial data (or initial TB) transmission, including resource information related to the current transmission and two retransmission resource information. Then, until completing the SL data transmission through five transmissions, the transmitting UE may continue to transmit the current transmission resource information and the future transmission resource information in a chain format to the receiving UE via the SCI. For example, the receiving UE may receive the SCI transmitted by a transmitting UE and determine at what time point in the future the transmitting UE transmits the SCI and the SL data linked to the SCI by considering the future transmission resource information (or the reserved resource information).

Further, for example, the receiving UE operating SL DRX may receive the 2nd stage SCI transmitted by the transmitting UE and determine the L1 ID ("pair of L1 source ID and L1 destination ID" or "L1 destination ID") information included in the 2nd stage SCI. At this time, if the receiving UE determines that it is the intended receiving UE, it may start an SL DRX timer (e.g., an SL DRX inactive timer, an SL DRX retransmission timer, or any SL DRX timer that causes the SL DRX active time to operate) and may operate in active mode during the timer interval to monitor the PSSCH/PSSCH transmitted by the transmitting UE.

That is, for example, a transmitting UE may deliver reserved resource information (resource information to be used for a future transmission) to a receiving UE via SCI. And, the transmitting UE may determine that at the time point of the future reserved resource information that it has reserved, the receiving UE may start an SL DRX timer (e.g., an SL DRX inactive timer, an SL DRX retransmission timer, or any SL DRX timer that causes the SL DRX active time to operate) and operate in active mode. Thus, for example, the transmitting UE may perform the following transmission resource selection operation.

According to one embodiment of the present disclosure, a transmitting UE may deliver resource information related to the current transmission and reserved resource information (resource information to be used for future transmissions) to a receiving UE via SCI for SL data transmission. At this time, the transmitting UE may determine that the receiving UE may start an SL DRX timer at the time point when the receiving UE receives the current SCI transmitted by it and operate in active mode during the timer interval. Furthermore, the transmitting UE may preliminarily determine that the receiving UE will operate in active mode during the timer interval by starting the SL DRX timer at the time point of the reservation resource information included in the current SCI transmitted by it.

In this case, for example, when new SL data occurs in a transmitting UE, the transmitting UE may select a resource in a future active time interval of a receiving UE as the initial transmission resource for the new SL data. For example, since the receiving UE will start an SL DRX timer when it receives the SCI transmitted by the transmitting UE and receives the SCI in the reserved resource information interval included in the SCI, the transmitting UE may consider this timer operation interval as the future active time of the receiving UE.

If, for example, a case occurs where the transmitting UE reselects for resources reserved through the SCI for a previous SL TB, for reasons such as preemption or UL/SL prioritization or NR SL/LTE SL prioritization or congestion control before the time point of the reserved resources, the (initial) transmission of the new SL TB using the selected resources in the future active time interval of the receiving UE, determined by the transmitting UE based on the reserved resources in the SCI for the previous SL TB, may be dropped. That is, for example, since if a transmitting UE transmits a new TB using resources reserved for the previous SL TB (resources that are within the future active time interval of a receiving UE), the new TB transmission time point may not be within the future active time interval of the receiving UE (i.e., it may be within a future inactive time interval (sleep mode operation interval)), the (initial) resources for the scheduled new SL TB transmission may be dropped (or the new TB transmission dropped). For example, when resource reselection occurs due to preemption or UL/SL prioritization or NR SL/LTE SL prioritization or congestion control of a transmitting UE, the SCI including the reselected resource is re-transmitted and because of the reserved resource information included in this SCI, the SL DRX timer start time point of a receiving UE may be changed, causing the future SL DRX active time of the receiving UE to change to SL DRX inactive time.

To address these issues, the following operations are proposed in this disclosure.

For example, a method that causes a newly reselected resource to be reselected only among resources that guarantees a resource that a transmitting UE selected for an initial transmission of a new SL data through SCI for the previous SL TB to be included within the SL DRX active time (the current active time due to the currently running SL DRX timer or the future active time, that will be an active time duration by an SL DRX timer that will be operated in the future based on the reservation information of the SCI) of the receiving UE, when a case occurs where the resource that the transmitting UE reserved through SCI for the previous SL TB needs to be reselected for reasons such as preemption or UL/SL prioritization or NR SL/LTE SL prioritization or congestion control before the reserved resource time point.

The operation of the present disclosure may be a solution applicable to all sidelink unicast/groupcast/broadcast operations. The solution may be applicable to both SL HARQ feedback enabled MAC PDU transmission or SL HARQ feedback disabled MAC PDU transmission operation.

The SL DRX configuration referred to in this disclosure may include at least one or more of the following parameters.

**[Table 13]**

| | | |
|---|---|---|
| | ● | Sidelink DRX configurations |
| ✔ | *SL drx-onDurationTimer:* the duration at the beginning of a SL DRX Cycle; | |
| ✔ | *SL drx-SlotOffset:* the delay before starting the sl *drx-onDurationTimer;* | |
| ✔ | *SL drx-InactivityTimer:* the duration after the PSCCH occasion in which a PSCCH indicates a new SL transmission for the MAC entity; | |
| ✔ | *SL drx-StartOffset:* the subframe where the SL DRX cycle start; | |
| ✔ | *SL drx-Cycle:* the SL DRX cycle; | |
| ✔ | *SL drx-HARQ-RTT-Timer* (per HARQ process or per sidelink process): the minimum duration before an assignment for HARQ retransmission is expected by the MAC entity. | |
| ✔ | *SL drx-RetransmissionTimer* (per HARQ process or per sidelink process): the maximum duration until a retransmission is received. | |

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

For example, the Uu DRX timer below referenced in this disclosure may be used for the following purposes.

drx-HARQ-RTT-TimerSL timer: it may represent an interval where a transmitting UE (UE supporting a Uu DRX operation) performing SL communication based on SL resource allocation mode 1 does not perform monitoring for a PDCCH (or, DCI) for SL mode 1 resource allocation from a base station.

drx-RetransmissionTimerSL timer: It may indicate an interval during which a transmitting UE (UE supporting a Uu DRX operation) performing SL communication based on SL resource allocation mode 1 performs monitoring for a PDCCH (or, DCI) for SL mode 1 resource allocation from a base station.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposal in this disclosure may be a solution that may also be applied and extended to address the problem of loss due to interruption in Uu bandwidth part (BWP) switching.

Furthermore, the proposal of the present disclosure may be a solution that may also be applied and extended to address the problem of loss due to interruption caused by SL BWP switching, for example, when a UE supports SL multiple BWP.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations. Furthermore, for example, an on-duration term referred to in the present disclosure may be extended and interpreted as an active time interval (a period of time when a UE is operating in a wake up state (RF module is on) to receive/transmit radio signals). Furthermore, for example, an off-duration term referred to in the present disclosure may be extended and interpreted as a sleep time interval (an interval during which a UE operates in a sleep mode state (RF module is off) to save power). Further, for example, whether (some of) the proposed schemes/rules of this disclosure apply and/or the related parameters (e.g., thresholds) may be configured specifically (or differently or independently) depending on the resource pool, congestion level, service priority (and/or type), QoS requirements (e.g., latency, reliability) or PQI, traffic type (e.g., (aperiodic) generation), SL transport resource allocation mode (Mode 1, Mode 2), etc. For example, in the sleep time, it does not imply that a transmitting UE is obligated to operate in sleep mode, i.e., if needed, the UE may be allowed to operate in active time for a short period of time to perform a sensing operation/transmission operation, even during a sleep period.

For example, whether to apply the proposals of the present disclosure (and/or related parameter configuration value) may be configured specifically (and/or, independently and/or differently) for at least one of a resource pool (e.g., a resource pool where a PSFCH is configured, a resource pool where a PSFCH is not configured), service/packet type (and/or priority), QoS profile or QoS requirement (e.g., URLLC/EMBB traffic, reliability, latency), PQI, PFI, cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, -based resource reselection) is (not) performed, (L2 or L1) (source and/or destination) ID, (L2 or L1) (a combination of a source layer ID and a destination layer ID) identifier, (L2 or L1) (a combination of a pair of a source layer ID and an destination layer ID, and a cast type) identifier, a direction of a pair of a source layer ID and a destination layer ID, PC5 RRC connection/link, a case where an SL DRX is (not) performed (or, supported), SL mode type (resource allocation mode 1, resource allocation mode 2), a case where (a)periodic resource reservation is performed.

The term specific time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

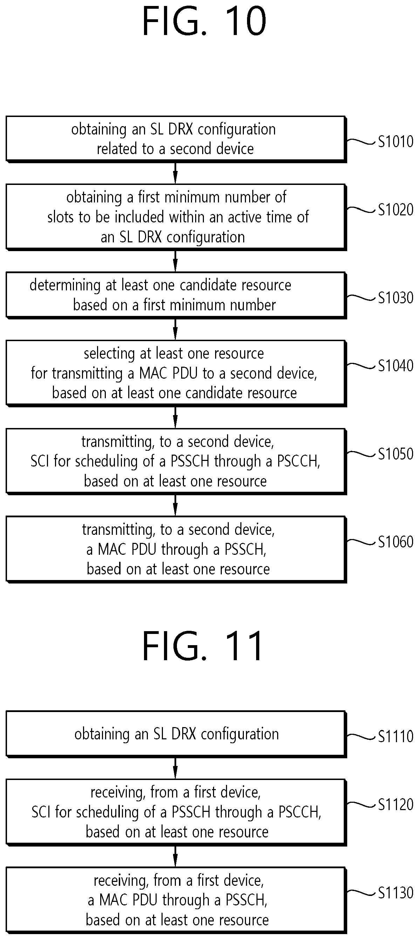

FIG. 10 shows a procedure for a first device to perform wireless communication, according to one embodiment of the present disclosure. The embodiment of FIG. 10 may be combined with various embodiments of the present disclosure.

Referring to FIG. 10, in step S 1010, a first device may obtain a sidelink, SL, discontinuous reception, DRX, configuration related to a second device. In step S1020, the first device may obtain a first minimum number of slots to be included within an active time of the SL DRX configuration. In step S1030, the first device may determine at least one candidate resource based on the first minimum number. In step S1040, the first device may select at least one resource for transmitting a medium access control, MAC, protocol data unit, PDU, to the second device, based on the at least one candidate resource. In step S1050, the first device may transmit, to the second device, sidelink control information, SCI, for scheduling of a physical sidelink shared channel, PSSCH, through a physical sidelink control channel, PSCCH, based on the at least one resource. In step S1060, the first device may transmit, to the second device, the MAC PDU through the PSSCH, based on the at least one resource.

For example, a number of slots, that are included within the active time, among the at least one candidate resource may be greater than equal to the first minimum number.

For example, the number of slots, that are included within the active time, among the at least one candidate resource may be greater than equal to the first minimum number, at a selection time point of the at least one resource.

For example, information for the first minimum number may be delivered to a physical, PHY, layer of the first device from a MAC layer of the first device.

For example, a PHY layer of the first device may obtain information for a current active time from a MAC layer of the first device.

For example, the information for the current active time may include information for the first minimum number.

For example, a resource among the at least one resource, that is not included within the current active time and included within an interval of a timer that the second device starts based on a reception of the SCI, may be a resource included within a future active time.

For example, the timer may be an inactivity timer of the SL DRX configuration.

For example, selecting the at least one resource may include: a MAC layer of the first device obtaining, from a PHY layer of the first device, the at least one candidate resource determined based on the first minimum number; and the MAC layer selecting the at least one resource based on the at least one candidate resource.

For example, at least one retransmission resource included in the at least one resource may be included within an inactive time, at a selection time point of the at least one resource.

For example, all retransmission resources included in the at least one resource may be included within the inactive time, at the selection time point of the at least one resource.

For example, a number of resources among the at least one resource, that are included within the active time, may be greater than or equal to a second minimum number, at a selection time point of the at least one resource.

For example, additionally, the first device may transmit, to the second device, the SL DRX configuration.

The embodiments described above may be applied to various devices described below. First, a processor 102 of a first device 100 may obtain a sidelink, SL, discontinuous reception, DRX, configuration related to a second device 200. And, the processor 102 of the first device 100 may obtain a first minimum number of slots to be included within an active time of the SL DRX configuration. And, the processor 102 of the first device 100 may determine at least one candidate resource based on the first minimum number. And, the processor 102 of the first device 100 may select at least one resource for transmitting a medium access control, MAC, protocol data unit, PDU, to the second device 200, based on the at least one candidate resource. And, the processor 102 of the first device 100 may control a transceiver 106 to transmit, to the second device 200, sidelink control information, SCI, for scheduling of a physical sidelink shared channel, PSSCH, through a physical sidelink control channel, PSCCH, based on the at least one resource. And, the processor 102 of the first device 100 may control the transceiver 106 to transmit, to the second device 200, the MAC PDU through the PSSCH, based on the at least one resource.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration related to a second device; obtain a first minimum number of slots to be included within an active time of the SL DRX configuration; determine at least one candidate resource based on the first minimum number; select at least one resource for transmitting a medium access control, MAC, protocol data unit, PDU, to the second device, based on the at least one candidate resource; transmit, to the second device, sidelink control information, SCI, for scheduling of a physical sidelink shared channel, PSSCH, through a physical sidelink control channel, PSCCH, based on the at least one resource; and transmit, to the second device, the MAC PDU through the PSSCH, based on the at least one resource.

For example, a number of slots, that are included within the active time, among the at least one candidate resource may be greater than equal to the first minimum number.

For example, the number of slots, that are included within the active time, among the at least one candidate resource may be greater than equal to the first minimum number, at a selection time point of the at least one resource.

For example, information for the first minimum number may be delivered to a physical, PHY, layer of the first device from a MAC layer of the first device.

For example, a PHY layer of the first device may obtain information for a current active time from a MAC layer of the first device.

For example, the information for the current active time may include information for the first minimum number.

For example, a resource among the at least one resource, that is not included within the current active time and included within an interval of a timer that the second device starts based on a reception of the SCI, may be a resource included within a future active time.

For example, the timer may be an inactivity timer of the SL DRX configuration.

For example, selecting the at least one resource may include: a MAC layer of the first device obtaining, from a PHY layer of the first device, the at least one candidate resource determined based on the first minimum number; and the MAC layer selecting the at least one resource based on the at least one candidate resource.

For example, at least one retransmission resource included in the at least one resource may be included within an inactive time, at a selection time point of the at least one resource.

For example, all retransmission resources included in the at least one resource may be included within the inactive time, at the selection time point of the at least one resource.

For example, a number of resources among the at least one resource, that are included within the active time, may be greater than or equal to a second minimum number, at a selection time point of the at least one resource.

For example, additionally, the first device may transmit, to the second device, the SL DRX configuration.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: obtain a sidelink, SL, discontinuous reception, DRX, configuration related to a second UE; obtain a first minimum number of slots to be included within an active time of the SL DRX configuration; determine at least one candidate resource based on the first minimum number; select at least one resource for transmitting a medium access control, MAC, protocol data unit, PDU, to the second UE, based on the at least one candidate resource; transmit, to the second UE, sidelink control information, SCI, for scheduling of a physical sidelink shared channel, PSSCH, through a physical sidelink control channel, PSCCH, based on the at least one resource; and transmit, to the second UE, the MAC PDU through the PSSCH, based on the at least one resource.

According to an embodiment of the present disclosure, a non-transitory computer-readable storage medium storing instructions may be proposed. For example, when executed, the instructions may cause a first device to: obtain a sidelink, SL, discontinuous reception, DRX, configuration related to a second device; obtain a first minimum number of slots to be included within an active time of the SL DRX configuration; determine at least one candidate resource based on the first minimum number; select at least one resource for transmitting a medium access control, MAC, protocol data unit, PDU, to the second device, based on the at least one candidate resource; transmit, to the second device, sidelink control information, SCI, for scheduling of a physical sidelink shared channel, PSSCH, through a physical sidelink control channel, PSCCH, based on the at least one resource; and transmit, to the second device, the MAC PDU through the PSSCH, based on the at least one resource.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may obtain a sidelink, SL, discontinuous reception, DRX, configuration. In step S1120, the second device may receive, from a first device, sidelink control information, SCI, for scheduling of a physical sidelink shared channel, PSSCH, through a physical sidelink control channel, PSCCH, based on at least one resource. In step S1130, the second device may receive, from the first device, the MAC PDU through the PSSCH, based on the at least one resource. For example, the at least one resource may be selected based on at least one candidate resource determined based on a first minimum number, the first minimum number may be a minimum number of slots to be included within an active time of the SL DRX configuration, and information for the first minimum number may be delivered to a physical, PHY, layer of the first device from a MAC layer of the first device.

For example, a number of slots, that are included within the active time, among the at least one candidate resource may be greater than equal to the first minimum number.

The embodiments described above may be applied to various devices described below. First, a processor 202 of a second device 100 may obtain a sidelink, SL, discontinuous reception, DRX, configuration. And, the processor 202 of the second device 100 may control a transceiver 206 to receive, from a first device 100, sidelink control information, SCI, for scheduling of a physical sidelink shared channel, PSSCH, through a physical sidelink control channel, PSCCH, based on at least one resource. And, the processor 202 of the second device 200 may control the transceiver 206 to receive, from the first device 100, the MAC PDU through the PSSCH, based on the at least one resource. For example, the at least one resource may be selected based on at least one candidate resource determined based on a first minimum number, the first minimum number may be a minimum number of slots to be included within an active time of the SL DRX configuration, and information for the first minimum number may be delivered to a physical (PHY) layer of the first device 100 from a MAC layer of the first device 100.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink, SL, discontinuous reception, DRX, configuration; receive, from a first device, sidelink control information, SCI, for scheduling of a physical sidelink shared channel, PSSCH, through a physical sidelink control channel, PSCCH, based on at least one resource; and receive, from the first device, the MAC PDU through the PSSCH, based on the at least one resource, wherein the at least one resource may be selected based on at least one candidate resource determined based on a first minimum number, wherein the first minimum number may be a minimum number of slots to be included within an active time of the SL DRX configuration, and wherein information for the first minimum number may be delivered to a physical, PHY, layer of the first device from a MAC layer of the first device.

For example, a number of slots, that are included within the active time, among the at least one candidate resource may be greater than equal to the first minimum number.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

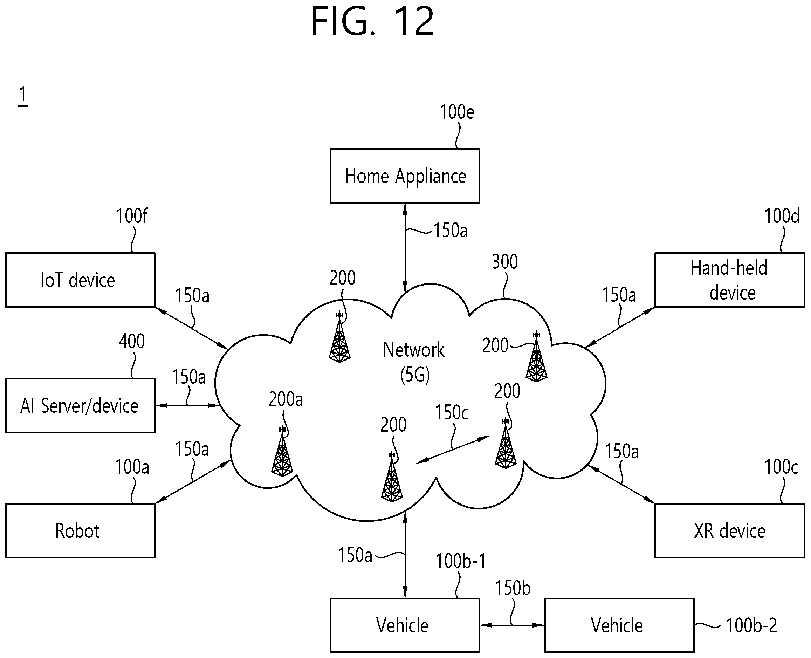

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

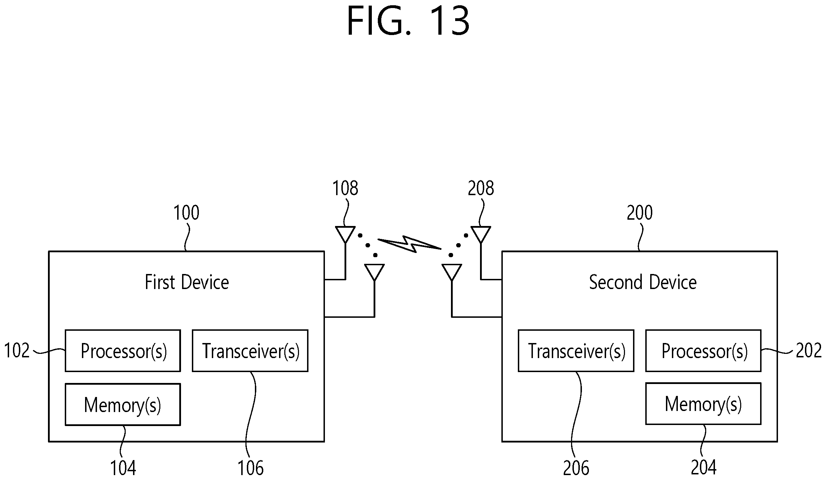

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

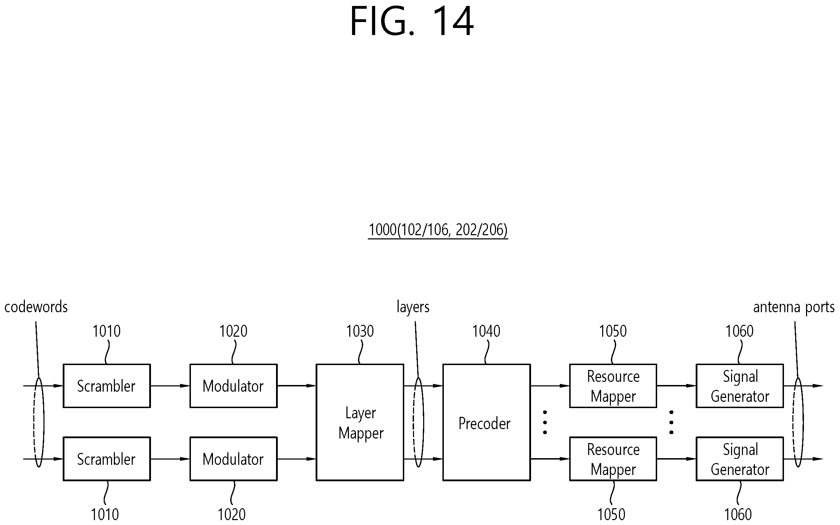

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

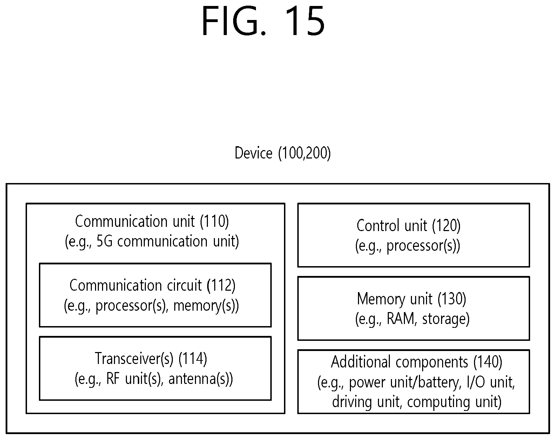

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

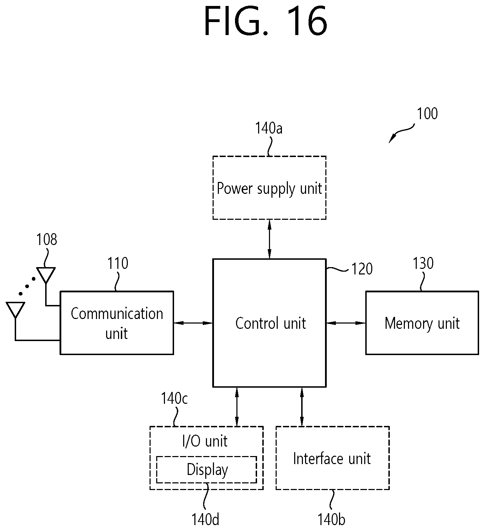

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

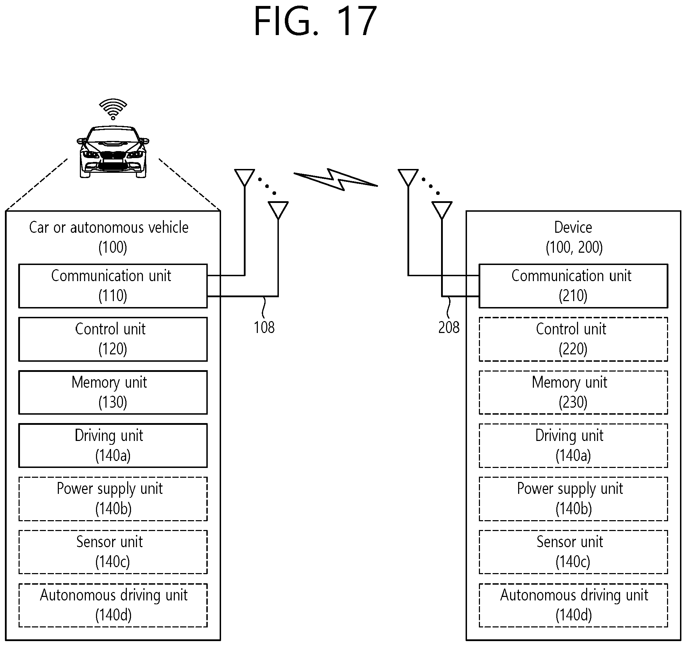

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining a sidelink, SL, discontinuous reception, DRX, configuration related to a second device;
obtaining a first minimum number of slots to be included within an active time of the SL DRX configuration;
determining at least one candidate resource based on the first minimum number;
selecting at least one resource for transmitting a medium access control, MAC, protocol data unit, PDU, to the second device, based on the at least one candidate resource;
transmitting, to the second device, sidelink control information, SCI, for scheduling of a physical sidelink shared channel, PSSCH, through a physical sidelink control channel, PSCCH, based on the at least one resource; and
transmitting, to the second device, the MAC PDU through the PSSCH, based on the at least one resource.

2. The method of claim 1, wherein a number of slots, that are included within the active time, among the at least one candidate resource is greater than equal to the first minimum number.

3. The method of claim 2, wherein the number of slots, that are included within the active time, among the at least one candidate resource is greater than equal to the first minimum number, at a selection time point of the at least one resource.

4. The method of claim 1, wherein information for the first minimum number is delivered to a physical, PHY, layer of the first device from a MAC layer of the first device.

5. The method of claim 1, wherein a PHY layer of the first device obtains information for a current active time from a MAC layer of the first device.

6. The method of claim 5, wherein the information for the current active time includes information for the first minimum number.

7. The method of claim 5, wherein a resource among the at least one resource, that is not included within the current active time and included within an interval of a timer that the second device starts based on a reception of the SCI, is a resource included within a future active time.

8. The method of claim 7, wherein the timer is an inactivity timer of the SL DRX configuration.

9. The method of claim 1, wherein selecting the at least one resource includes:
a MAC layer of the first device obtaining, from a PHY layer of the first device, the at least one candidate resource determined based on the first minimum number; and
the MAC layer selecting the at least one resource based on the at least one candidate resource.

10. The method of claim 1, wherein at least one retransmission resource included in the at least one resource is included within an inactive time, at a selection time point of the at least one resource.

11. The method of claim 10, wherein all retransmission resources included in the at least one resource is included within the inactive time, at the selection time point of the at least one resource.

12. The method of claim 1, wherein a number of resources among the at least one resource, that are included within the active time, is greater than or equal to a second minimum number, at a selection time point of the at least one resource.

13. The method of claim 1, further comprising:
transmitting, to the second device, the SL DRX configuration.

14. A first device for performing wireless communication, the first device comprising:
one or more memories storing instructions;
one or more transceivers; and
one or more processors connected to the one or more memories and the one or more transceivers, wherein the one or more processors execute the instructions to:
obtain a sidelink, SL, discontinuous reception, DRX, configuration related to a second device;
obtain a first minimum number of slots to be included within an active time of the SL DRX configuration;
determine at least one candidate resource based on the first minimum number;
select at least one resource for transmitting a medium access control, MAC, protocol data unit, PDU, to the second device, based on the at least one candidate resource;
transmit, to the second device, sidelink control information, SCI, for scheduling of a physical sidelink shared channel, PSSCH, through a physical sidelink control channel, PSCCH, based on the at least one resource; and
transmit, to the second device, the MAC PDU through the PSSCH, based on the at least one resource.

15. A device adapted to control a first user equipment, UE, the device comprising:
one or more processors; and
one or more memories operably connectable to the one or more processors and storing instructions, wherein the one or more processors execute the instructions to:
obtain a sidelink, SL, discontinuous reception, DRX, configuration related to a second UE;
obtain a first minimum number of slots to be included within an active time of the SL DRX configuration;
determine at least one candidate resource based on the first minimum number;
select at least one resource for transmitting a medium access control, MAC, protocol data unit, PDU, to the second UE, based on the at least one candidate resource;
transmit, to the second UE, sidelink control information, SCI, for scheduling of a physical sidelink shared channel, PSSCH, through a physical sidelink control channel, PSCCH, based on the at least one resource; and
transmit, to the second UE, the MAC PDU through the PSSCH, based on the at least one resource.

16. A non-transitory computer-readable storage medium storing instructions that, when executed, cause a first device to:
obtain a sidelink, SL, discontinuous reception, DRX, configuration related to a second device;
obtain a first minimum number of slots to be included within an active time of the SL DRX configuration;
determine at least one candidate resource based on the first minimum number;
select at least one resource for transmitting a medium access control, MAC, protocol data unit, PDU, to the second device, based on the at least one candidate resource;
transmit, to the second device, sidelink control information, SCI, for scheduling of a physical sidelink shared channel, PSSCH, through a physical sidelink control channel, PSCCH, based on the at least one resource; and
transmit, to the second device, the MAC PDU through the PSSCH, based on the at least one resource.

17. A method for performing, by a second device, wireless communication, the method comprising:
obtaining a sidelink, SL, discontinuous reception, DRX, configuration;
receiving, from a first device, sidelink control information, SCI, for scheduling of a physical sidelink shared channel, PSSCH, through a physical sidelink control channel, PSCCH, based on at least one resource; and
receiving, from the first device, the MAC PDU through the PSSCH, based on the at least one resource,
wherein the at least one resource is selected based on at least one candidate resource determined based on a first minimum number,
wherein the first minimum number is a minimum number of slots to be included within an active time of the SL DRX configuration, and
wherein information for the first minimum number is delivered to a physical, PHY, layer of the first device from a MAC layer of the first device.

18. The method of claim 17, wherein a number of slots, that are included within the active time, among the at least one candidate resource is greater than equal to the first minimum number.

19. A second device for performing wireless communication, the second device comprising:
one or more memories storing instructions;
one or more transceivers; and
one or more processors connected to the one or more memories and the one or more transceivers, wherein the one or more processors execute the instructions to:
obtain a sidelink, SL, discontinuous reception, DRX, configuration;
receive, from a first device, sidelink control information, SCI, for scheduling of a physical sidelink shared channel, PSSCH, through a physical sidelink control channel, PSCCH, based on at least one resource; and
receive, from the first device, the MAC PDU through the PSSCH, based on the at least one resource,
wherein the at least one resource is selected based on at least one candidate resource determined based on a first minimum number,
wherein the first minimum number is a minimum number of slots to be included within an active time of the SL DRX configuration, and
wherein information for the first minimum number is delivered to a physical, PHY, layer of the first device from a MAC layer of the first device.

20. The second device of claim 19, wherein a number of slots, that are included within the active time, among the at least one candidate resource is greater than equal to the first minimum number.
